# EUROPEAN PATENT APPLICATION

(11) **EP 1 739 302 A1**
(43) Date of publication of application: **03.01.2007**
(21) Application number: 05254171.1
(22) Date of filing: 02.07.2005
(51) Int. Cl.: F02M 37/02, F02M 37/10

(54) **Jet pump assembly for a fuel delivery system or fuel delivery system**

(71) Applicant: Delphi Technologies, Inc., Troy, MI 48007 (US)
(72) Inventor: Cremer, Hugues, 6600 Bastogne (BE)
(74) Representative: Jones, Keith William

(57) **Abstract**

A jet pump assembly for a fuel delivery system comprising of a jet pump body (18), a venturi-cylinder (20) downstream of the jet pump body (18), the jet pump body (18) having an orifice (22) opening into the venturi-cylinder (20), a jet pump tube (24) upstream of the jet pump body (18), and a cross-over tube (26) upstream of the jet pump tube (24) allowing fluid connection to the jet pump tube (24) and to a fuel pump (30) of the fuel delivery system is disclosed further comprising of a valve (40) provided as a means for closing said orifice (22) specifically when the fuel pump (30) is not in operation.

## Description

The present invention relates to a jet pump assembly for a fuel delivery system comprising of a jet pump body, a venturi-cylinder downstream of the jet pump body, the jet pump body having an orifice opening into the venturi-cylinder, a jet pump tube upstream of the jet pump body, a cross-over tube upstream of the jet pump tube allowing fluid connection to the jet pump tube and to a fuel pump of the fuel delivery system. The present invention also relates to a fuel delivery system comprising of a fuel tank and such jet pump assembly comprised in the fuel tank, preferably comprised in a reservoir assembly which in turn is comprised in the fuel tank.

Such jet pump assemblies for a fuel delivery system or such fuel delivery system are known in the art.

A drawback of the prior art systems is that due to a siphoning effect the fuel contained in the jet pump tube and/or in the jet pump body drains fuel from the fuel pump. This is especially disadvantageous when the vehicle comprising such jet pump assembly with flow fuel level in the fuel tank is parked a slope which accounts for the fuel flowing to on side of the tank only and not surrounding the fuel pump.

The object of the invention is to overcome problems and drawbacks described above.

This is achieved by means of a jet pump assembly as described above further comprising a valve provided as a means for closing said orifice specifically when the fuel pump is not in operation.

The advantage of the invention is that the outlet of the jet pump body, the orifice, is sealed by the valve. Once the jet pump body is sealed the siphoning effect is prohibited.

The valve is preferably a one-way valve, such as a duck-bill valve, allowing substance flow only in the direction

Other features and advantages of the present invention will appear from the following description of a preferred embodiments of the invention, given as a non-limiting example, illustrated in the drawings. All the elements which are not required for the immediate understanding of the invention are omitted. In the drawing, the same elements are provided with the same reference numerals in the various figures, an in which:
- Fig. 1: is a cross-sectional view of a fuel delivery system comprising of a fuel tank and a reservoir assembly contained therein, and
- Fig. 2: is a cross-sectional view of the reservoir assembly and a jet pump assembly for a fuel delivery system contained in the reservoir assembly.

In the following description, for purposes of explanation and not limitation, specific details are set forth, such as particular embodiments, data flows, signalling implementations, interfaces, techniques, etc. in order to provide a thorough understanding of the present invention. However, it will be apparent to one skilled in the art that the present invention may be practiced in other embodiments that depart from these specific details.

In other instances, detailed descriptions of well-known methods, devices, and physical effect are omitted so as not to obscure the description of the present invention with unnecessary detail.

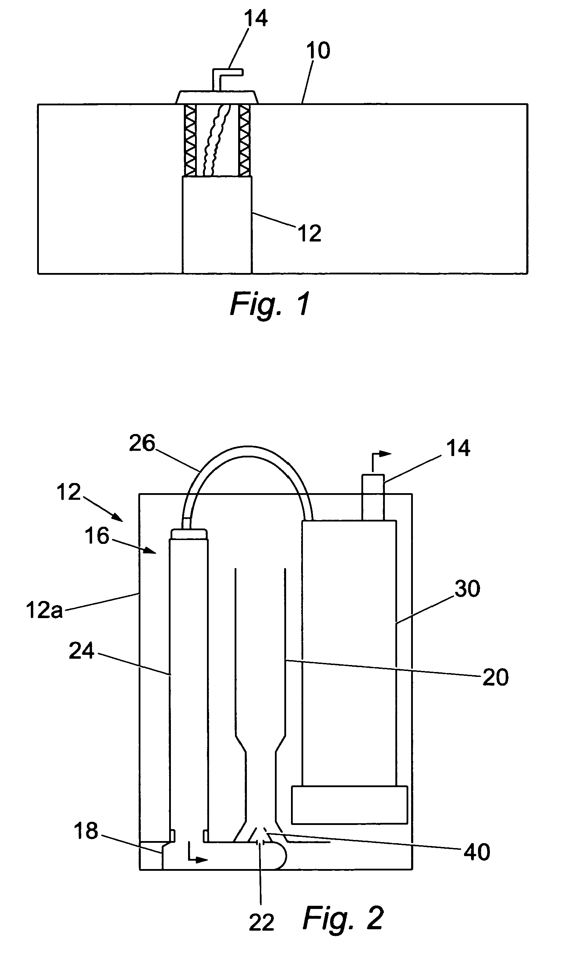

**Fig. 1** is a cross-sectional view of a fuel delivery system comprising of a fuel tank **10** and a reservoir assembly **12** contained in the fuel tank 10. The reservoir assembly 12 comprises of a pipe **14** leading to an engine, such as a combustion engine.

**Fig. 2** is a cross-sectional view of the reservoir assembly 12 and a jet pump assembly **16** for a fuel delivery system contained in the reservoir 12a of the reservoir assembly 12. The jet pump assembly 16 comprises of a jet pump body **18,** a venturi-cylinder **20** downstream of the jet pump body 18, the jet pump body 18 having an orifice **22** opening into the venturi-cylinder 20, a jet pump tube **24** upstream of the jet pump body 18, a cross-over tube **26** upstream of the jet pump tube 24. The cross-over tube 26 allows fluid connection between a fuel pump **30** and the jet pump tube 24. The fuel pump 30 is also contained in the reservoir assembly 12. The fuel pump 30 is not part of the jet pump assembly 12. However, the fuel pump 30 is regarded as being part of the fuel delivery system.

During operation the fuel pump 30 pumps fuel from the interior of the reservoir 12a both to the engine an into the cross-over tube 26. From the cross-over tube 26 the fuel reaches the jet pump tube 24 downstream of the cross-over tube 26 and the jet pump body 18 downstream of the jet pump tube 24. The fuel exits the jet pump body 18 under high pressure through the orifice 22. The shape of the venturi-cylinder 20 accounts for fuel being aspirated by the fuel jet exiting the orifice 22 into the venturi-cylinder 20. This aspiration allows for fuel to be sucked into the reservoir 12a from the fuel tank 10 an thus for a higher fuel level in the reservoir 12a as in the fuel tank 10 during operation of the fuel pump 30.

When the fuel pump 30 is switched off, the fuel remaining in the jet pump tube 24 and/or the cross over tube 26 drains fuel from the fuel pump 30 due to a siphoning effect.

This is prevented by means of a valve 40, preferably a one-way valve, such as a duck-bill valve, sealing the orifice 22, i.e. the outlet of the jet pump body 18, when the fuel pump 30 is not in operation.

Although a preferred embodiment of the invention has been illustrated and described herein, it is recognized that changes and variations may be made without departing from the invention as set forth in the claims.

## Claims

1. A jet pump assembly for a fuel delivery system comprising of:
a jet pump body (18),
a venturi-cylinder (20) downstream of the jet pump body (18), the jet pump body (18) having an orifice (22) opening into the venturi-cylinder (20),
a jet pump tube (24) upstream of the jet pump body (19),
a cross-over tube (26) upstream of the jet pump tube (24) allowing fluid connection to the jet pump tube (24) and to a fuel pump (30) of the fuel delivery system
**characterised in**
a valve (40) provided as a means for closing said orifice (22) specifically when the fuel pump (30) is not in operation.

2. The jet pump assembly of claim 1, wherein the valve (40) is a duck-bill type valve.

3. A fuel delivery system comprising of a fuel tank (10) and a reservoir assembly (12), said reservoir assembly (12) comprising of a jet pump assembly as in claim 1 or claim 2.
